# EUROPEAN PATENT APPLICATION

(11) **EP 1 526 093 A2**
(43) Date of publication of application: **27.04.2005**
(21) Application number: 04256546.5
(22) Date of filing: 22.10.2004
(51) Int. Cl.: B65D 81/34

(54) **Plastic tray**

(30) Priority: 24.10.2003 GB 0324832
(71) Applicant: Sharp Interpack Limited, Bridgewater, Somerset TA6 5YS (GB)
(72) Inventor: Davis, Anton, Livingstone, West Lothian EH54 6TJ (GB)
(74) Representative: Knowles, James Atherton

(57) **Abstract**

A plastic tray is disclosed comprising a first layer of a polyester and a second layer of a support polymer to provide structural support to the tray on heating. One intended use of the plastic tray is as a disposable food tray for roast-in-the-pack applications. The polyester is preferably crystallisable poly(ethylene terephthalate) and the support polymer, polycarbonate. The polycarbonate layer is additionally useful as a heat-seal layer. Also disclosed is a process for producing a plastic tray comprising thermoforming a plastic tray.

## Description

This invention relates to plastic trays and processes for producing plastic trays. In particular, this invention relates to plastic trays which may be used as food trays suitable for both microwave and conventional ovens.

The properties needed in plastic trays are technically demanding. This is especially true for plastic food trays for ready meals. In addition to the normal performance characteristics required of a food tray (e.g. shape, flange regularity, cut quality, denestability), food trays for ready meals have to withstand an extreme temperature range of from below freezing at about -20°C to conventional oven temperatures of up to 220°C or higher. Plastic food trays have to be relatively cheap so as to be suitable for disposable packaging.

In ready meal applications, the consumer will cook or reheat a meal supplied in a plastic tray that has either been frozen or chilled using the tray itself as the container for the meal in the oven.

Polyesters are often used in the production of plastic food containers including plastic food trays. Currently, one of the preferred polyesters is poly(ethylene terephthalate) (PET).

PET may be used in its amorphous form (often known as APET) which usually contains up to 10% of a copolymer of isophthalic acid (IPA) which has the effect of inhibiting crystallisation of the polymer and reducing its glass transition temperature (T_{g}). The T_{g} of APET is usually about 75°C (or a little lower as percentage of IPA increases) and, therefore, APET is not suitable for food trays for use in microwave or domestic ovens because a tray of APET would soften and collapse completely at the temperatures typically reached.

Plastic food trays for use in both microwave and conventional ovens (so called dual-ovenable food trays) are therefore often made from crystallisable PET (often known as CPET). CPET differs from APET in three ways. CPET contains a nucleator which promotes crystallisation (e.g. during forming of a tray). CPET usually contains no crystallisation inhibiting copolymers. CPET usually has a higher intrinsic viscosity (IV) as a result of greater chain length of the polymer. Greater chain length helps to counter the reduction in impact strength resulting from brittleness of the crystal structure. Because the melting point of CPET crystals is about 255°C, a food tray made of sufficiently crystalline CPET will not soften and distort at usual domestic oven temperatures.

A need exists for plastic food trays suitable for roast-in-the-pack applications where the meal is intended to be roasted in a domestic oven. Unfortunately, known polyester trays are not suitable for such roast-in-the-pack application because during the higher temperatures, and, in particular, the greater residence times required for roasting, a polyester (for example, a CPET) tray will continue to crystallise. After a typical period and at a typical temperature required for roasting (for example two hours at 200°C) the percentage of crystallisation of, for example, CPET is very high - perhaps 80% or more (as measured by density change). Although the crystals are strong and rigid they are brittle and weak along the grain boundaries between the crystals. Known CPET trays which are used for roasting will therefore be extremely brittle and unable to withstand any bending movement especially as the tray cools. These trays are therefore likely to shatter when the roasted meal is removed from the oven.

It is an aim of the present invention to address the problems associated with known polyester trays and, in particular, to provide a food tray suitable for roast applications.

The present invention accordingly provides, in a first aspect, a plastic tray comprising a first layer comprising a polyester and a second layer comprising a support polymer to provide structural support to the tray on heating.

Preferably, the support polymer comprises (or is) a polymer having a glass transition temperature of 110°C or greater.

This is advantageous because the second layer comprising the polymer having a relatively high glass transition temperature provides support to the polyester layer after an extended time at an elevated temperature when the polyester layer will have become brittle owing to its increased crystallinity. If the glass transition temperature of the second layer comprising a support polymer is lower than 110°C, the second layer may not provide sufficient support to the first layer if, on the removal from e.g. a domestic oven, the temperature of the tray is higher than 110°C.

Furthermore, if T_{g} is too low the support polymer layer will be runny and sticky at oven temperatures. If situated on the inside of the tray, a layer of such a polymer could interact with the contents of the tray, especially food. If situated on the outside of the tray, a layer of such a polymer may stick to hot metal surfaces of e.g. an oven.

Preferably the support polymer will have a glass transition temperature of 115°C or greater, 120°C or greater, 125°C or greater, 130°C or greater, 135°C or greater, 140°C or greater or 145°C or greater. Generally, it is advantageous if the glass transition temperature of the support polymer is higher because this provides greater support for the tray and reduces the possibility that the second layer will soften at domestic oven temperatures.

It is much preferred if the support polymer (of the second layer) is substantially amorphous. This is advantageous because it reduces the chance that a plastic tray which has been heated for an extended period will become brittle (as would e.g. CPET alone) because the polymer layer is substantially amorphous.

Preferably, the support polymer will be food-contact approved, and should usually be such as to co-process (i.e. not be incompatible) with the polyester.

The support polymer may comprise a polyethylsulphone, polymethyl methacrylate or an amorphous polyamide or a derivative of such polymers. However, in a preferred embodiment, the support polymer comprises (or is) a polycarbonate.

Surprisingly, the applicants have discovered that a second layer comprising a support polymer, preferably polycarbonate, provides support to the tray especially when the tray is heated for extended periods at relatively high temperatures. Thus, even when the polyester becomes more crystalline and brittle the support polymer, preferably the polycarbonate, layer (which may be substantially amorphous even after heating for an extended time) provides support so that the tray is not as brittle as would be a tray of polyester alone.

The support polymer (e.g. polycarbonate) will, most preferably, be fully food-contact approved. This is especially important if e.g. a polycarbonate layer is to be in direct contact with the contents of the tray.

The polycarbonate preferably comprises (or is) polycarbonate of bisphenol A although other polycarbonates as known to the skilled person may also be suitable.

In an embodiment, the plastic tray may comprise a third layer also comprising a support polymer, preferably polycarbonate. In this further embodiment, the three layers of the plastic tray may be arranged ABA, wherein A represents a support polymer (preferably a polycarbonate) layer and B the polyester layer. In other embodiments further layers of polyester or support polymer, preferably polycarbonate, may be added or the arrangement of the layers may be changed.

Generally, it is preferred if the layers of the tray are such that the, or a, support polymer layer is on the inside of the tray (where it comes into contact with the contents of the tray i.e. the food contact surface). This is advantageous because the support polymer (e.g. the polycarbonate) layer may act as a heat seal layer if arranged on the inside of the tray.

It may also be preferred if the polyester layer (or a polyester layer if there are 2 or more polyester layers) is on the outside of the tray (i.e. the surface which will be in contact with the surfaces of the oven) because polyester (and especially CPET) is not prone to tacking to the oven surfaces at typical roasting oven temperatures. However, whether this is advantageous depends upon the nature of the other layers, especially the support layer.

The polyester will preferably not be a polycarbonate (i.e. will differ from a polycarbonate support polymer) and is more preferably an aromatic polyester (i.e. a polyester having one or more aromatic groups in the polymer chain). Preferred polyesters may comprise poly(ethylene terephthalate), poly(propylene terephthalate), poly(butylene terephthalate), poly(ethylene naphthalate) or a mixture of these polyesters. The most preferred polyester comprises crystallisable poly(ethylene terephthalate).

In the various embodiments of the invention, it is preferred if the polyester layer makes up between 50 and 95% of the thickness of the plastic tray. If there is a single support polymer layer (e.g. a polycarbonate layer) then the remaining thickness may be made up of this layer. Similarly, if there are two or more support polymer layers (e.g. polycarbonate layers) their combined thickness may make up the balance of the thickness of the plastic tray.

The polyester may contain nucleator in order to promote crystallisation of the polyester. The polyester may contain a coloured master batch (which itself may contain a nucleator) if a coloured tray is required.

In food trays a covering seal film is usually welded or otherwise affixed to the tray to seal in food contained in the tray. A heat sealing layer on the tray provides a surface to which the covering film may be welded or affixed.

The present invention accordingly provides, in another aspect, a plastic tray comprising poly(ethylene terephthalate) and a layer of polycarbonate for use as a heat seal layer. This is advantageous because the polycarbonate layer may provide both structural properties for the plastic tray that has been heated at an elevated temperature for an extended period and also because its use as a heat seal layer ensures that another layer on the plastic tray is not required in order to provide this property.

In the various aspects and embodiments of the present invention the tray will usually be a food tray. It is preferred if the layers of the tray are selected so at to provide the tray with dual-ovenable properties and in particular to provide the tray with properties such that the tray is serviceable as a food tray after heating at 200°C or above for two or for three hours. This is advantageous because this heating regime is typically used in roasting applications.

The plastic tray may be manufactured in a number of ways. Support polymer film (especially polycarbonate, e.g. Makrolon 3208) may be laminated to polyester (especially CPET) film either off-line (i.e. lamination of two films) or by laminating a film of support polymer (e.g. polycarbonate) on to extruded polyester at the die. Alternatively, one of the layers may be extrusion coated on to the other (e.g. extrusion coating of polycarbonate on to CPET film).

The present invention also provides, in a further aspect, a process for producing a plastic tray, comprising forming a plastic sheet by co-extruding a first layer comprising a polyester and a second layer comprising a support polymer to provide structural support to the tray on heating. Preferably, the support polymer is (or comprises) polycarbonate. The process will further comprise, in a preferred embodiment, thermoforming the plastic sheet to produce a plastic tray. During extrusion, it is preferred if the processing temperature of the polyester extrusion is in the range 260°C to 285°C.

In a further aspect, the present invention also provides a process for producing a plastic tray, the process comprising,
providing a plastic sheet having a first layer comprising a polyester, and a second layer comprising a support polymer to provide structural support to the tray on heating; and
thermoforming the plastic sheet to produce a plastic tray.

In this specification the words sheet and film are used interchangeably except when the context requires otherwise.

The various features of the invention as described in relation to each individual embodiment or aspect can, as would be apparent to the skilled person, be applied to the other embodiments or aspects of the invention and would have the corresponding advantages.

The invention is illustrated with reference to the Examples which describe the production and testing of plastic trays.

In the Examples and Comparative Examples the production of extruded film using polyester (CPET) and polycarbonate is described. The polycarbonate used in the production of the trays described in the Examples was obtained from Bayer and is sold under the trade name Makrolon. As would be apparent to the skilled person, polycarbonate produced and sold under different trade names would be equally applicable in the present invention. The Makrolon polycarbonate as used in the Examples and Comparative Examples has a glass transition temperature typically of 148°C and a melt mass flow rate of 4-6.5 g/10mins.

### Comparative Example A

Pre-dried (180°C for 6 hours using air with a dew point of -40°C), pelletised, virgin crystallisable poly(ethylene terephthalate) (Permaclear A06310 obtained from Wellman) was fed to a WELEX 90mm extruder set up using a conventional temperature profile for solid CPET (285°C to 260°C) at a flow rate through the extruder of 400kg/hr. An amorphous PET (Permaclear D04300CP) heat seal layer was co-extruded on one surface of the CPET sheet at 10% layer. The sheet was taken up on a roll. The extruded film was thermoformed into a plastic tray using a hot mould/cold mould process. In the thermoforming process the film is preheated to 160°C, the temperature of the hot mould was about 190°C and the temperature of the cold mould is about 10°C.

The CPET tray was heated to a temperature of about 210°C for 4 hours. The tray became extremely brittle and shattered on slight impact.

### Comparative Example B

A blend of 15% w/w high viscosity polycarbonate of bisphenol A (Makrolon 3208, Bayer) and 85% w/w crystallisable PET (as described in Comparative Example A) was fed to an Amut 90mm extruder. 3% w/w of a standard polyethylene-based (PE) nucleator was added. A film was extruded under the extrusion conditions for CPET as described in Comparative Example A.

It was observed that the material coming out of the extrusion die was badly degraded. Extrusion was accompanied by intense fuming. The melt was bright gold in colour. The degradation continued even at relatively low die temperatures (down to 170°C).

Extrusion was performed under the same conditions, but with no nucleator added. Under these conditions, there was no apparent degradation. However, the extruded film had a very poor surface finish and phase separation of polycarbonate and PET was apparent.

A tray was produced by thermoforming from the extruded sheet produced using no nucleator. The tray was heated in a microwave oven and did not collapse as would an amorphous PET tray. However, when heated in a conventional oven at 180°C, the tray collapsed, presumably because in the absence of nucleator there was insufficient crystallisation of the PET, and hence insufficient strength at oven temperatures.

### Example 1

A three layer film was co-extruded using the Welex 90mm extruder as an ABA structure with A being polycarbonate (Makrolon 3208 as described in Comparative Example B) and B being CPET (as described in Comparative Example A). Each of the A layers was 10% w/w, the B layer being 80% w/w. The conditions for extrusion of the CPET (B) layer were as described above for Comparative Example A. Standard nucleator as described in Comparative Example B (3% w/w based on CPET) was added to the CPET (B) layer only.

The polycarbonate layers (A) were extruded under the same conditions as each other at a temperature of 260-285°C. The extruded film was taken up on a roll.

Plastic trays are made from the extruded film by thermoforming using the conditions described in Comparative Example A.

Plastic trays were subjected to a standard quality control test for dual-ovenable trays of heating to 180°C for 10 minutes. The trays maintained shape very well and were not brittle.

Plastic trays were heated to 210°C for 4 hours. After this treatment the trays were still serviceable with no signs of excessive brittleness.

### Example 2

Large plastic trays of a suitable size for testing applicability for roasting applications (260mm x 195mm x 40mm with 8mm flange) were manufactured generally as described in Example 1, except that black masterbatch (including a PE-based nucleator) was added to the CPET layer and the polycarbonate layers were extruded using Makrolon 1243, a more viscous grade than Makrolon 3208. The surface finish of the extruded film and trays was less good than Example 1 (owing to poorer extrusion stability with the more viscous polycarbonate), the appearance being slightly patchy. However, the trays were serviceable, passing the standard quality control test and withstanding heating to 210°C for 4 hours without deformation, cracking or excessive brittleness. The trays also exhibited good heat-sealability, giving good weld and peelable seal films. The weld seal film was biorientated polyester Melinex 850 (TM) and the peelable seal film was biorientated polyester Mylar 0L (TM) both obtained from Du Pont Teijin Films.

### Example 3

A three layer film of polycarbonate (Makrolon 3208) and CPET (as described in Comparative Example A) was extruded in an ABA structure using a WELEX 125mm extruder. Each of the polycarbonate (A) layers was 12.5% w/w; the (B) CPET layer being 75% w/w.

Initially, extrusion was at 270°C barrel temperature. The extrusion was not stable owing to pressure swinging from shear thinning, so the temperature of extrusion was increased to 300°C barrel temperature, where the pressure swinging ceased.

Deep plastic trays generally of a size suitable for roasting applications were manufactured from the extruded film generally as described in Examples 1 and 2. The plastic trays all passed the standard quality control test and were serviceable and not excessively brittle after heating to 210°C for 4 hours. The trays were also tested for heat sealability (as described in Example 2) and showed very good properties.

## Claims

1. A plastic tray comprising
a first layer comprising a polyester, and
a second layer comprising a support polymer to provide structural support to the tray on heating.

2. A plastic tray as claimed in claim 1, wherein the support polymer comprises a polymer having a glass transition temperature of 110°C or greater.

3. A plastic tray as claimed in claim 2, wherein the polymer has a glass transition temperature of 140°C or greater.

4. A plastic tray as claimed in any one of the preceding claims, wherein the support polymer is substantially amorphous.

5. A plastic tray as claimed in any one of the preceding claims, wherein the support polymer comprises a polycarbonate.

6. A plastic tray as claimed in claim 5, wherein the polycarbonate comprises polycarbonate of bisphenol A.

7. A plastic tray as claimed in any one of the preceding claims, further comprising a third layer comprising a support polymer.

8. A plastic tray as claimed in claim 7, wherein the support polymer of the third layer comprises polycarbonate.

9. A plastic tray as claimed in either claim 7 or claim 8, wherein the three layers of the plastic tray are arranged ABA, wherein A represents a support polymer layer and B the polyester layer.

10. A plastic tray as claimed in any one of the preceding claims, wherein the second layer comprising the support polymer is on the inside surface of the plastic tray.

11. A plastic tray as claimed in any one of the preceding claims, wherein the polyester comprises an aromatic polyester.

12. A plastic tray as claimed in any one of the preceding claims, wherein the polyester comprises poly(ethylene terephthalate), poly(propylene terephthalate), poly(butylene terephthalate), poly(ethylene naphthalate) or a mixture of these polyesters.

13. A plastic tray as claimed in any one of the preceding claims wherein the polyester comprises crystallisable poly(ethylene terephthalate).

14. A plastic tray as claimed in any one of the preceding claims, wherein the polyester layer makes up between 50 and 95% of the thickness of the plastic tray.

15. A plastic tray as claimed in any one of the preceding claims, wherein the polyester contains nucleator.

16. A plastic tray as claimed in any one of the preceding claims, wherein the polyester contains a coloured masterbatch.

17. A plastic tray as claimed in any one of the preceding claims, wherein the support polymer is food contact approved.

18. A plastic tray comprising poly(ethylene terephthalate) and a layer of polycarbonate for use as a heat-seal layer.

19. A plastic tray as claimed in any one of the preceding claims, wherein the tray is a food tray.

20. A plastic tray as claimed in any one of the preceding claims, wherein the layers are selected so as to provide the tray with dual-ovenable properties.

21. A plastic tray as claimed in claim 20, wherein the tray is serviceable as a food tray after heating at 200°C or above for 3 hours.

22. A process for producing a plastic tray, the process comprising, providing a plastic sheet having a first layer comprising a polyester, and a second layer comprising a support polymer to provide structural support to the tray on heating; and
thermoforming the plastic sheet to produce a plastic tray.
